# EUROPÄISCHE PATENTSCHRIFT

(11) **EP 3 601 629 B1**
(45) Veröffentlichungstag und Bekanntmachung des Hinweises auf die Patenterteilung: **25.11.2020**
(21) Anmeldenummer: 18720218.9
(22) Anmeldetag: 24.04.2018
(51) Int. Cl.: C23C 4/02, C23C 4/18, C23C 4/06, C23C 4/08, C23C 4/10, C23C 28/00, F16J 9/26, F16J 10/04, C23C 4/131, C23C 4/129, C23C 4/134

(54) **KOLBENRING MIT KUGELGESTRAHLTER EINLAUFSCHICHT UND VERFAHREN ZUR HERSTELLUNG**
PISTON RING WITH SHOT-PEENED RUNNING-IN LAYER AND METHOD FOR THE PRODUCTION THEREOF
SEGMENT DE PISTON COMPRENANT UNE COUCHE DE RODAGE GRENAILLÉE ET PROCÉDÉ POUR SA FABRICATION

(30) Priorität: 21.07.2017 DE 102017116480
(43) Veröffentlichungstag der Anmeldung: 05.02.2020
(73) Patentinhaber: Federal-Mogul Friedberg GmbH, 86316 Friedberg (DE)
(72) Erfinder: BUCHMANN, Michael, 81249 München (DE); AUMILLER, Markus, 86316 Friedberg (DE)
(74) Vertreter: Becker & Kurig Partnerschaft Patentanwälte PartmbB
(86) Internationale Anmeldenummer: PCT/EP2018/060449
(87) Internationale Veröffentlichungsnummer: WO 2019/015818

(56) Entgegenhaltungen:
- WO-A1-2008/083793
- DE-A1- 10 212 299
- DE-A1-102007 025 949
- DE-T2- 69 502 181
- DE-T2- 69 700 387
- DE-U1-202009 009 206

## Beschreibung

Die vorliegende Erfindung betrifft einen Kolbenring und ein Verfahren zu dessen Herstellung, insbesondere einen Großkolbenring mit einer Mehrlagenbeschichtung für eine Verbrennungskraftmaschine bzw. einen Kolbenring für 2-Takt-Anwendungen.

Bei Kolbenringen wie beispielsweise denen von Hubkolben-Verbrennungskraftmaschinen sind zwei an sich gegensätzliche Anforderungen zu erfüllen. Zum einen muss eine hohe Verschleißfestigkeit gegeben sein, da anderenfalls, d.h. bei dünner werdendem Kolbenring, die Gasleckage und der Ölverbrauch zunehmen können sowie die Leistung des Motors sich verschlechtert. Durch einen sich abreibenden Kolbenring wird der Spalt zwischen Zylinderwand und Kolbenring immer größer, so dass Verbrennungsgase leichter an dem Ring vorbei austreten können (so genanntes Blow-By), was die Effizienz des Motors verringert. Durch einen vergrößerten Spalt wird weiterhin der im Verbrennungsraum zurückbleibende nicht abgestreifte Ölfilm dicker, so dass mehr Öl pro Zeiteinheit verloren gehen kann, also der Ölverbrauch erhöht wird.

Um möglichst optimale Motoreigenschaften zu erreichen, also den bestmöglichen Kompromiss zwischen maximaler Dichtwirkung und geringen Reibungsverlusten zu erreichen, muss daher die Dimension des Spaltes zwischen Kolbenring(en) und Zylinderwand möglichst genau eingehalten werden. Dies würde allerdings bei Herstellung und Zusammenbau des Motors aufwendige und teure Verfahrensschritte erfordern, da es ansonsten immer zu einem gewissen Grad an unvermeidlichen Toleranzen kommt. Eine eventuell geringfügig zu kleine Spaltdimension wird daher gewöhnlich in Kauf genommen, wobei dem Kolbenring weiter gestattet wird, durch Abrieb im Betrieb die optimale Dicke zu erreichen. Dabei reibt sich idealerweise die Lauffläche des Kolbenrings soweit ab, bis der optimale Spaltdurchmesser erreicht ist. Dieser Vorgang wird auch als Einlaufen bezeichnet.

Einerseits ist also ein möglichst verschleißfestes Material gewünscht, um zu erreichen, dass sich im regulären Betrieb der Kolbenring möglichst wenig abnutzt und der Spalt sich kaum vergrößert. Um gute Einlaufeigenschaften zu erreichen, muss aber zumindest ein Teil der Lauffläche im Verhältnis leichter abgerieben werden können, damit sich ein eventuell (z.B. aufgrund unvermeidlicher Bauteiltoleranzen) zu kleiner Spalt zwischen Kolbenring und Zylinderwand während dem Einlaufbetrieb möglichst rasch auf die richtige Dimension erweitern kann.

Prinzipiell werden Kolbenringe daher mit Beschichtungen versehen, welche die gewünschten Eigenschaften hervorbringen sollen. Dies ist naturgemäß einfacher zu handhaben und billiger, als den gesamten Kolbenring aus einem möglicherweise teuren Material mit den gewünschten Eigenschaften herzustellen. Bei solchen Beschichtungen kommt eine weitere Anforderung hinzu. Die Beschichtung muss neben der Bereitstellung der nötigen Eigenschaften auch so beschaffen sein, dass sie sich nicht von dem Kolbenring ablöst, also gute Adhäsion mit dem zugrunde liegenden Material aufweist. Sofern die Beschichtung aus mehreren unterschiedlichen Schichten besteht, ist ferner ein guter Zusammenhalt zwischen den Schichten erforderlich, also eine gute Kohäsion. Anderenfalls drohen Rissbildung oder Ablösung der Schichten, was für den Motor gefährlich sein kann.

Beschichtungen auf den Laufflächen von Kolbenringen müssen in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Außerdem sollen diese Schichten eine hohe Ausbruchsicherheit haben und auch nach langen Laufzeiten kein oder nur ein geringes Ermüdungsverhalten zeigen.

Verschleißschutzschichten werden beispielsweise aus Hartchrom hergestellt. Die DE 199 31 829 A1 beschreibt eine galvanische Hartchromschicht für einen Kolbenring. Weitere Materialien für Verschleißschutzschichten sind Chrom mit Aluminiumoxidkeramik (z.B. CKS® der Firma Federal-Mogul) oder Chrom mit Microdiamant (z.B. GDC® der Firma Federal-Mogul).

Auf CKS®-Verschleißschutzschichten aufgebrachte Einlaufschichten basieren beispielsweise auf Molybdän, das mittels Drahtflammspritzens auf die Verschleißschutzschicht aufgebracht wird. Die Verschleißschutzschicht wird hierbei zuvor durch einen Strahlprozess aktiviert.

Weiterhin kann auf einer CKS®-Verschleißschutzschicht durch thermisches Spritzen eine Einlaufschicht aus einer AlCuFe-Legierung aufgebracht werden. Hierzu muss auf die CKS®-Verschleißschutzschicht jedoch zunächst eine galvanische Zwischenschicht aufgebracht werden. Weitere beschichtete Kolbenringe sind in WO 2008/083793 A1 und DE 69700387 T2 offenbart.

Die Einlauf- und Verschleißeigenschaften von bekannten Kolbenringen mit einer auf Chrom basierenden Verschleißschutzschicht und einer darauf aufgebrachten Einlaufschicht bedürfen allerdings noch der Verbesserung.

Die vorliegende Erfindung hat die Aufgabe, einen Kolbenring mit verbessertem Einlauf- und Verschleißverhalten sowie ein Verfahren zu dessen Herstellung bereitzustellen.

Gemäß einer Ausführungsform der Erfindung wird ein Kolbenring nach Anspruch bereitgestellt, umfassend:
- einen Ringkörper;
- eine auf dem Ringkörper durch thermisches Spritzen aufgebrachte Verschleißschutzschicht; und
- eine auf der Verschleißschutzschicht durch thermisches Spritzen aufgebrachte kaltverfestigte Einlaufschicht aus einer AlCuFe-Legierung.

Der erfindungsgemäße Kolbenring stellt durch die Verwendung der zwei unterschiedlichen Funktions-Schichten eine neue und vorteilhafte Kombination aus Verschleißfestigkeit (durch die Verschleißschutzschicht) und günstigen Einlaufeigenschaften (durch die Einlaufschicht) bereit. Die Einlaufschicht wird beispielsweise durch Kugelstrahlen geeignet nachbearbeitet und dabei kaltverfestigt und verdichtet. Die Verschleißschutzschicht verhindert übermäßigen Verschleiß unter extremen Betriebsbedingungen des Motors.

Zusätzlich ist der Kolbenring gekennzeichnet durch:
- einen Ringkörper ;
- eine auf dem Ringkörper durch thermisches Spritzen aufgebrachte Verschleißschutzschicht; und
- eine auf der Verschleißschutzschicht durch thermisches Spritzen aufgebrachte Einlaufschicht aus einer AlCuFe-Legierung, wobei die Einlaufschicht eine Rauigkeit Rz von 60-95 µm aufweist.

Zudem ist der Kolbenring gekennzeichnet durch:
- einen Ringkörper;
- eine auf dem Ringkörper durch thermisches Spritzen aufgebrachte Verschleißschutzschicht; und
- eine auf der Verschleißschutzschicht durch thermisches Spritzen aufgebrachte Einlaufschicht aus einer AlCuFe-Legierung, die eine Härte HV von 150-250 aufweist.

In einer Ausführungsform des Kolbenrings ist die Einlaufschicht durch Lichtbogen-Drahtspritzen auf die Verschleißschutzschicht aufgebracht. Lichtbogendrahtspritzen ist eine einfache und Kostengünstige Art eine Beschichtung auf einen Untergrund aufzubringen. Dieses Verfahren eignet sich besonders dazu relativ weiche Beschichtungen herzustellen, wie sie für Einlaufschichten genutzt werden können. Durch das Lichtbogen-Drahtspritzen kann eine Verschleißschutzschicht auch aus AlCuFe leicht hergestellt werden.

Gemäß der Erfindung ist die Einlaufschicht aus AlCuFe durch Kugelstrahlen kaltverfestigt. Durch das Kaltverfestigen werden Druckspannungen in die Schicht eingebracht, was zu einer Verfestigung der Einlaufschicht führt. Bisher wurden Einlaufschichten nicht nachbearbeitet, da ihre Aufgabe darin besteht während einer Einlaufphase abgetragen zu werden. Einer Schicht, die sich innerhalb eines kurzen Betriebszeitraums fast vollständig abträgt, muss scheinbar keine erhöhte Aufmerksamkeit geschenkt werden, weshalb weitere Bearbeitungsschritte bisher entfallen sind. Durch das Kaltverfestigen kann erreicht werden, dass eine Einlaufschicht stabiler wird, und daher länger hält, wodurch der Einlaufprozess einer Kolbenmaschine verlängert werden kann. Weiterhin wird üblicherweise ein anderes Material verwendet oder die Dicke der Einlaufschicht verändert, um die Einlaufdauer an einen gewünschten Wert anzupassen. Hier wird die Stabilität der Einlaufschicht durch Kaltverfestigen erhöht um bei gleichem Materialaufwand die Einlaufdauer zu erhöhen, oder die Dicke des Materials bei gleicher Einlaufdauer zu verringern. Die Einlaufschicht weist nur eine geringe Dicke auf, und die Kaltverfestigung kann eine Verfestigung über im Wesentlichen die gesamte Dicke der Einlaufschicht erreichen.

Gemäß der Erfindung umfasst der Kolbenring eine Oberfläche der Einlaufschicht, die nach dem Kugelstrahlen eine Überdeckung von 50-100%, bevorzugt von 70-100% und weiter bevorzugt von 90-100% aufweist. Dabei sind mindestens 50% der Oberfläche der Einlaufschicht von Eindrücken der Kugeln aufgrund des Kugelstrahlprozesses betroffen. Die Eindrücke der Kugeln auf der Oberfläche der Einlaufschicht bedecken dabei mindestens 50 bevorzugt mindestens 70% und weiter bevorzugt mindestens 90% der Oberfläche der Einlaufschicht. Die Oberflächenstruktur der Einlaufschicht zeigt unter dem Mikroskop die Abdrücke der Kugeln, die beim Kugelstrahlen entstanden sind. Durch die Oberflächenstruktur mit den Abdrücken der Kugeln kann einfach ermittelt werden, ob die Einlaufschicht durch Kugelstrahlen kaltverfestigt wurde oder nicht.

Bevorzugt ist eine Haftvermittlerschicht zwischen Ringkörper und Verschleißschutzschicht vorgesehen. Die Haftvermittlerschicht sorgt für einen optimalen Halt der Schichten auf dem Ringkörper.

Bevorzugt sind die Verschleißschutzschicht und die Einlaufschicht und gegebenenfalls die Haftvermittlerschicht in überspritzter Form aufgebracht.

Bevorzugt weist der Ringkörper Gasentlastungsschlitze auf, die an ihren Kanten eine Fase aufweisen.

Bevorzugt weist die Fase einen Winkel von 30° bis 70° auf. Weiterhin bevorzugt weist die Fase eine Breite von 0,5 bis 2,0 mm auf.

Gemäß einem weiteren Aspekt der Erfindung wird ein Verfahren zur Herstellung eines Kolbenrings nach Anspruch 6 bereitgestellt, umfassend:
- Bereitstellen eines Ringkörpers;
- thermisches Aufspritzen einer Verschleißschutzschicht auf dem Ringkörper; und
- thermisches Aufspritzen einer Einlaufschicht aus einer AlCuFe-Legierung.auf die Verschleißschutzschicht, wobei die Einlaufschicht durch Kugelstrahlen verdichtet wird.

Bevorzugt werden die Verschleißschutzschicht und die Einlaufschicht und gegebenenfalls die Haftvermittlerschicht in überspritzter Form aufgebracht.

Bevorzugt schließt das thermische Aufspritzen die folgenden Beschichtungsverfahren ein:
- ein Lichtbogendraht-Beschichtungsverfahren;
- ein Flamm-Beschichtungsverfahren;
- atmosphärisches Plasmaspritzen, APS; und
- Hochgeschwindigkeits-Flammspritzen, HOVF.

In dem Verfahren kann die Einlaufschicht durch Lichtbogen-Drahtspritzen auf die Verschleißschutzschicht aufgebracht werden.

Die Einlaufschicht wird durch Kugelstrahlen kaltverfestigt werden.

Das Kugelstrahlen wird dabei so ausgeführt, dass eine Überdeckung von 50-100% bevorzugt 70-100% und weiter bevorzugt 90-100% erreicht wird.

Bevorzugt umfasst das Verfahren weiter:
- Versehen der Flanke des Ringkörpers mit einer Fase an ihren Kanten, vor dem Aufspritzen der Haftvermittlerschicht.

Wenn der Ringkörper Gasentlastungsschlitze aufweist, umfasst das Verfahren bevorzugt weiter:
- Versehen der Gasentlastungsschlitze mit einer Fase an ihren Kanten, vor dem Aufspritzen der Haftvermittlerschicht.

Bevorzugt weist die Fase einen Winkel von 30° bis 70° auf. Weiterhin bevorzugt weist die Fase eine Breite von 0,5 bis 2,0 mm auf.

Im Folgenden wird die vorliegende Erfindung anhand von Figuren schematischer Darstellungen von beispielhaften Ausführungen veranschaulicht.
Fig. 1A bis 1F zeigen eine Ausführung des Verfahrens anhand einer Schnittansicht durch einen Kolbenring während verschiedener Bearbeitungsschritte.
Fig. 2 zeigt eine Aufsicht auf eine kaltverfestigte Einlaufschicht an der Lauffläche einer Ausführung eines erfindungsgemäßen Kolbenrings.

Sowohl in der Beschreibung als auch in den Figuren werden gleiche oder ähnliche Bezugszeichen verwendet um auf gleiche oder ähnliche Elemente und Komponenten Bezug zu nehmen.

Beschichtungen auf den Laufflächen von Kolbenringen müssen außer einer guten und temperaturfesten Haftung (Adhäsion) am Träger und einer guten und temperaturfesten Bindung innerhalb der Schicht (Kohäsion) auch in dem mit der Zylinderwand in Berührung stehenden Oberflächenbereich verschleißfest sein. Darüber hinaus soll ihr Eigenverschleiß in der Einlaufphase für eine genügende Anpassung an die Gegenfläche ausreichen. Darüber hinaus sollen diese Schichten eine hohe Ausbruchsicherheit haben und auch nach langen Laufzeiten kein oder nur ein geringes Ermüdungsverhalten zeigen.

Hier wird eine kaltverfestigte Einlaufschicht aus einer AlCuFe-Legierung verwendet, die durch Lichtbogen-Drahtspritzen auf einen Kolbenring hergestellt wird. Das Kaltverfestigen wird hier durch Kugelstrahlen erreicht, wodurch eine Glättung und eine Verfestigung der Einlaufschicht stattfindet. Das Kugelstrahlen bzw. das Kaltverfestigen bewirken eine Verdichtung der aufgespritzten Einlaufschicht. Durch das Kaltverfestigen werden Druckspannungen in der Einlaufschicht erzeugt, die eine bessere und festere Einlaufschicht ergeben. Das Kaltverfestigen kann nahezu die gesamte Dicke der Einlaufschicht betreffen. Das Kugelstrahlen soll mit Stahlkugeln mit einem Durchmesser von 0,5 bis 1mm durchgeführt werden, da dann eine hinreichend glatte und verfestigte Oberfläche der Einlaufschicht erreicht werden kann. Der Strahldruck kann dabei zwischen 2,5 bar und 6 bar, bevorzugt zwischen 3 bar und 5,5 bar und weiter bevorzugt zwischen 4 bar und 5 bar betragen. Es kann hier mit einem Abstand zwischen 50 und 200mm von der Oberfläche der Einlaufschicht Kugelgestrahlt werden. Es ist möglich einen Massedurchsatz von 1 bis 3 kg Strahlkugeln pro Minute beim Kugelstrahlen zu verwenden. Anstelle von Kugelstrahlen kann auch Rollieren, Rändeln oder Hämmern als Kaltverfestigungsverfahren verwendet werden.

Der vorliegenden Erfindung liegt daher die Aufgabe zugrunde, die Laufflächen von Kolbenringen mit durch ein Flammspritzverfahren aufgetragenen, verschleißfesten Schichten zu versehen, die extremen Belastungen standhalten können, dabei aber ein gutes Einlaufverhalten zeigen. Das Verfahren der Herstellung der Schichten soll möglichst einfach und Kosten sparend sein, und vor allem soll es ermöglichen, die verschleißfesten Beschichtungen und auch die Einlaufschicht mit auf den jeweiligen Anwendungsfall abgestimmten Eigenschaften herzustellen.

Erfindungsgemäß wird diese Aufgabe in einer ersten Ausführungsform durch eine Beschichtung gelöst, welche aus mindestens zwei übereinander liegenden unterschiedlichen Spritzschichten besteht: einer Verschleißschutzschicht, gegebenenfalls einer Haftvermittlerschicht und einer äußeren Einlaufschicht. Durch eine entsprechende Anfasung von Kanten an Ringflanke und die Verwendung von Gasentlastungsschlitzen vor der Beschichtung können Adhäsion und Kohäsion der Schichten weiter verbessert werden.

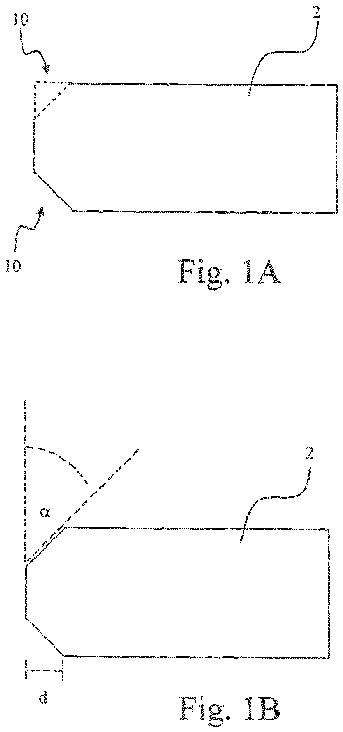

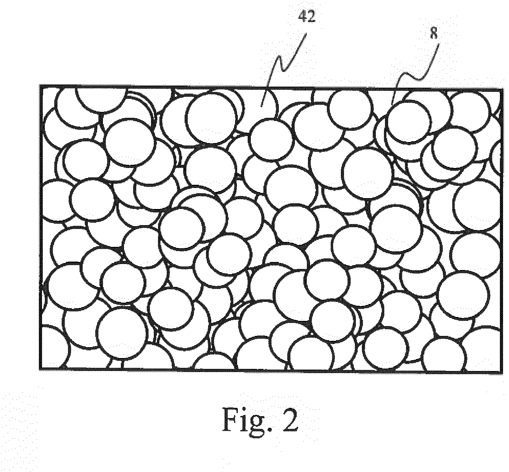

In den Figuren 1A und 1B ist in einer Querschnittsansicht gezeigt, wie der Kolbenring oder der Ringkörper 2 angefast wird. Auf der Laufflächen-Seite (in der Figur links) können gemäß der Erfindung vor der Beschichtung die Kanten des Kolbenrings 2 mit einer Fase 10 versehen werden. Der Winkel α der Fase 10 kann gemäß der Erfindung zwischen 30° und 70° liegen, wobei in Fig. 2 beispielhaft ein Winkel von 45° gezeigt ist. Weiterhin kann die Fase 10 gemäß verschiedener Ausführungsformen der Erfindung eine Breite d von 0,5 bis zu 2 mm aufweisen. Das Abfasen von Kanten ist ein optionaler Schritt bei der Herstellung des Kolbenrings bzw. die Fase ist ein optionales Merkmal beim fertigen Kolbenring gemäß der Erfindung. Das Abfasen kann mit jedem geeigneten bekannten Verfahren ausgeführt werden. Es ist ebenfalls möglich die Lauffläche des Kolbenrings abzurunden, um so eine tonnenfömige Lauffläche zu erhalten. Das Abfasen oder Formen der Lauffläche kann mit jedem geeigneten bekannten Verfahren ausgeführt werden.

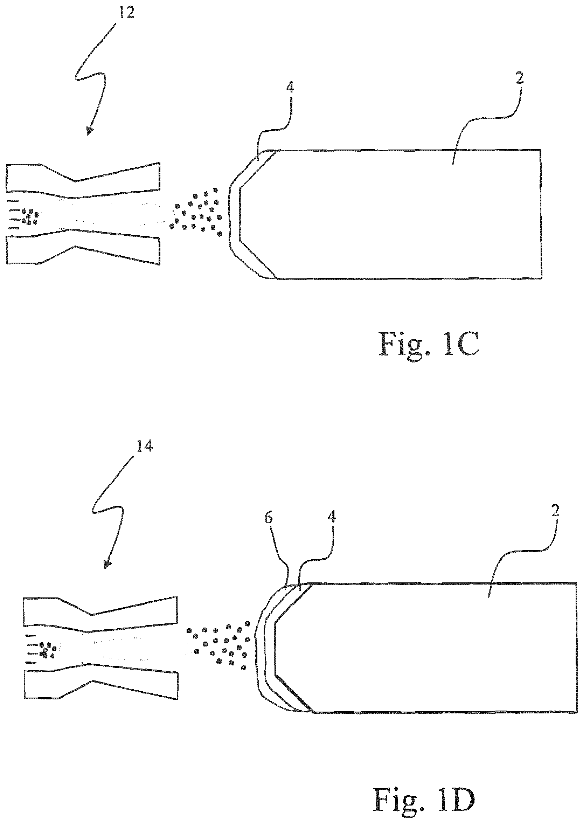

Fig. 1C zeigt in einer Querschnittsansicht den Schritt des Aufbringens der ersten Lage der Beschichtung. Auf den Ringkörper 2 wird eine Haftvermittlerschicht 4 aufgebracht. Dies geschieht gemäß der Erfindung mittels einem thermischen Spritzverfahren, einschließlich Hochgeschwindigkeits-Flammspritzen (High Velocity Oxy-Fuel, HVOF), atmosphärisches Plasmaspritzen (APS), Lichtbogendraht- oder Drahtflammbeschichtungsverfahren. Beispielhaft ist dies durch eine HVOF-Einrichtung 12 dargestellt. Die Haftvermittlerschicht 4 ist hier als eine Nickel-Legierung ausgeführt.

In der Fig. 1D wird dann eine Verschleißschutzschicht 6 auf bzw. über der Haftvermittlerschicht 4 aufgebracht. Dies kann ebenso wie das Aufbringen der Haftvermittlerschicht durch eines der vorstehend genannten thermischen Spritzverfahren erfolgen, wobei auch verschiedene Verfahren für jeweils verschiedene Schichten zum Einsatz kommen können. Dies wird im dem gezeigten Beispiel ebenfalls durch eine HVOF-Einrichtung 14 erreicht. Das Schichtdesign ist FF, das heißt überspritzt.

Die Verschleißschutzschicht kann ist gemäß der ersten Ausführungsform der Erfindung eine Molybdän-Legierung mit Chromkarbid CrC oder Wolframkarbid WC oder Molybdänkarbid MoC sein.

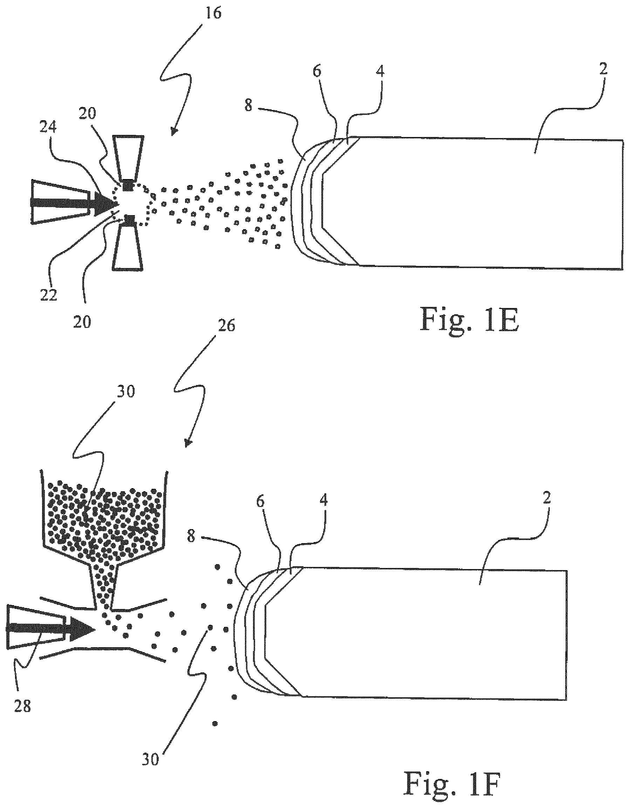

In der Fig. 1E wird dann eine Einlaufschicht 8 über bzw. auf die eine Verschleißschutzschicht 6 aufgebracht. Dies wird durch Lichtbogen-Drahtspritzen mittels einer Lichtbogen-Drahtspritzvorrichtung 16 durchgeführt. Das Schichtdesign ist hier ebenfalls FF, das heißt überspritzt. Die Einlaufschicht umfasst Aluminium-Kupfer-Eisen (eine AlCuFe-Legierung). Bei dem Kolbenring handelt es sich bevorzugt um einen Großkolbenring für eine 2-Takt Verbrennungskraftmaschine.

In Figur 1F wird die zuletzt aufgebrachte Einlaufschicht an deren Oberfläche bzw. Lauffläche durch Kugelstrahlen nachbearbeitet. Die Einlaufschicht wird an der Lauffläche kaltverfestigt, wodurch die Einlaufphase des Motors verlängert wird oder der Abrieb durch Verwendung einer dünneren Einlaufschicht verringert werden kann. Die Kugelstrahlanlage 26 wird zur Kaltverfestigung verwendet.

In Fig. 1F ist der fertige Kolbenring gemäß der Erfindung in einer Querschnittsansicht dargestellt, umfassend den Ringkörper 2, die Haftvermittlerschicht 4, die Verschleißschutzschicht 6 und die Einlaufschicht 8.

Gemäß der vorliegenden Erfindung umfasst ein Kolbenring einen Ringkörper, eine auf der Lauffläche des Ringkörpers aufgebrachte Verschleißschutzschicht und eine auf der Verschleißschutzschicht aufgebrachte Einlaufschicht aus einer AlCuFe-Legierung, die kaltverfestigt wurde. Die AlCuFe-Legierung kann aus diesen Bestandteilen sowie unvermeidbaren Verunreinigungen bestehen, oder AlCuFe-Legierung weitere Legierungselemente und Festschmierstoffe wie beispielsweise Kohlenstoff in geringeren Mengen umfassen.

In Figur 2 ist ein vergrößerter Ausschnitt der Lauffläche des erfindungsgemäßen Kolbenrings dargestellt wobei die Oberfläche die Abdrücke der Kugelstrahl-Kugeln 42 auf der Lauffläche bzw. der Einlaufschicht 8 zeigt. Die Abdrücke 42 zeigen hier eine große Überdeckung, wodurch die gesamte Oberfläche der Einlaufschicht 8 kaltverfestigt ist.

Der Kolbenring gemäß der Ausführungsform der Erfindung stellt durch die Verwendung der beiden unterschiedlichen Funktionsschichten eine neue und vorteilhafte Kombination aus Verschleißfestigkeit (durch die Verschleißschutzschicht) und günstigen Einlaufeigenschaften (durch die Einlaufschicht aus AlCuFe) bereit. Die Einlaufschicht 8 wird nach dem Aufspritzen kaltverfestigt und wird durch den in der Einlaufphase erfolgenden Abrieb abgetragen. Die Verschleißschutzschicht 6 verhindert übermäßigen Verschleiß unter extremen Betriebsbedingungen des Motors.

Bevorzugt umfasst die Verschleißschutzschicht 6 Hartchrom, Chrom mit Aluminiumoxidkeramik (z.B. CKS® der Firma Federal-Mogul) oder Chrom mit Microdiamant (z.B. GDC® der Firma Federal-Mogul) Die Verschleißschutzschicht 6 kann ebenfalls mit einer DLC-Schicht (Diamond-like-Carbon) versehen sein oder eine solche Schicht umfassen.

Die Einlaufschicht 8 hat bevorzugt eine Schichtdicke von 20 bis 400 µm.

Bevorzugt erfolgt das Auftragen der Verschleißschutzschicht durch ein thermisches Spritzverfahren. Bevorzugt handelt es sich bei dem thermischen Spritzverfahren um atmosphärisches Plasmaspritzen (APS, z.B. MKP) oder Hochgeschwindigkeits-Flammspritzen (HOVF, z.B. MKJet® der Firma Federal-Mogul). Bevorzugt umfasst die Verschleißschutzschicht Hartchrom, Chrom mit Aluminiumoxidkeramik (z.B. CKS® der Firma Federal-Mogul) oder Chrom mit Microdiamant oder eine Diamond-Like-Carbon-Schicht (z.B. GDC® der Firma Federal-Mogul).

Bevorzugt wird die Verschleißschutzschicht durch einen Strahlprozess oder thermisch aktiviert.

Das Auftragen der Einlaufschicht 8 erfolgt durch ein thermisches Beschichtungsverfahren. Bei dem thermischen Beschichtungsverfahren handelt es sich bevorzugt um Lichtbogen-Drahtspritzen.

Die Einlaufschicht 8 hat bevorzugt eine Schichtdicke von 20 bis 400 µm.

### Bezugszeichenliste

- 2: Kolbenring / Ringkörper
- 4: Haftvermittlerschicht
- 6: Verschleißschutzschicht
- 8: Einlaufschicht
- 10: Fase
- 12: Flammspritzvorrichtung für die Haftvermittlerschicht
- 14: Flammspritzvorrichtung für die Verschleißschutzschicht
- 16: Lichtbogen-Drahtspritzvorrichtung
- 20: Draht-Elektrode
- 22: Lichtbogen
- 24: Gasstrom
- 26: Kugelstrahlvorrichtung
- 30: Kugelvorrat
- 32: Gas-/Luftstrom
- 34: Kugelstrahl-Stahlkugel
- 42: Abdrücke von Strahlkugeln
- α: Fasenwinkel
- d: Breite der Fase

## Patentansprüche

1. Kolbenring, umfassend:
- einen Ringkörper (2);
- eine auf dem Ringkörper (2) thermisch aufgespritzte Verschleißschutzschicht (6); und
- eine auf der Verschleißschutzschicht (6) thermisch aufgespritzte Einlaufschicht (8) aus einer AlCuFe-Legierung,
- wobei die Einlaufschicht (8) Abdrücke von Kugelstrahl-Kugeln umfasst,
- wobei die Einlaufschicht (8) eine Härte HV von 150-250 aufweist,
- wobei beim Kugelstrahlen eine Überdeckung von 50-100% erreicht wird, und wobei die Einlaufschicht (8) eine Rauigkeit Rz von 50-95 µm aufweist.

2. Kolbenring nach Anspruch 1, wobei die Einlaufschicht (8) durch Lichtbogen-Drahtspritzen auf die Verschleißschutzschicht (6) aufgebracht ist.

3. Kolbenring nach einem der vorhergehenden Ansprüche, weiter aufweisend eine auf der Lauffläche des Ringkörpers (2) thermisch aufgepritzte Haftvermittlerschicht (4), wobei die Verschleißschutzschicht (6) auf der Haftvermittlerschicht (4) aufgebracht ist.

4. Kolbenring nach einem der vorhergehenden Ansprüche, wobei die Verschleißschutzschicht (6) und die Einlaufschicht (8) in überspritzter Form aufgebracht sind, und/oder wobei die Flanke des Ringkörpers an ihren Kanten eine Fase aufweist, wobei die Fase vorzugsweise einen Winkel von 30° bis 70° und/oder eine Breite von 0,5 bis 2,0 mm aufweist, und/oder wobei der Ringkörper Gasentlastungsschlitze aufweist, die an ihren Kanten eine Fase aufweisen, wobei die Fase vorzugsweise einen Winkel von 30° bis 70° und/oder eine Breite von 0,5 bis 2,0 mm aufweist.

5. Kolbenring nach einem der vorhergehenden Ansprüche, wobei der Kolbenring ein Großkolbenring ist.

6. Verfahren zum Herstellen eines Kolbenrings :
- Bereitstellen eines Ringkörpers (2);
- thermisches Aufspritzen einer Verschleißschutzschicht (6) auf dem Ringkörper (2); und
- thermisches Aufspritzen einer Einlaufschicht (8) aus einer AlCuFe-Legierung auf die Verschleißschutzschicht (6), und
- Kaltverfestigen der Einlaufschicht durch Kugelstrahlen, wobei bei dem Kugelstrahlen eine Überdeckung von 50-100% erreicht wird,
- wobei die Einlaufschicht (8) eine Härte HV von 150-250 aufweist, und
- wobei die Einlaufschicht (8) eine Rauigkeit Rz zwischen 60 und 95 µm aufweist.

7. Verfahren nach Anspruch 6, wobei die Einlaufschicht durch Lichtbogen-Drahtspritzen auf die Verschleißschutzschicht (6) aufgebracht wird.

8. Verfahren nach einem der Ansprüche 6 oder 7, wobei das thermische Aufspritzen der Verschleißschutzschicht einschließt:
- ein Lichtbogendraht-Beschichtungsverfahren;
- ein Drahtflamm-Beschichtungsverfahren;
- atmosphärisches Plasmaspritzen, APS; und
- Hochgeschwindigkeits-Flammspritzen, HOVF.

9. Verfahren nach einem der Ansprüche 7 bis 9, weiter umfassend:
- Versehen der Flanke des Ringkörpers mit einer Fase an ihren Kanten, wobei die Fase vorzugsweise einen Winkel von 30° bis 70° und/oder eine Breite von 0,5 bis 2,0 mm aufweist, und/oder
- Versehen der Gasentlastungsschlitze mit einer Fase an ihren Kanten, wobei die Fase vorzugsweise einen Winkel von 30° bis 70° und/oder eine Breite von 0,5 bis 2,0 mm aufweist.

## Claims

1. A piston ring, comprising:
- an annular body (2);
- a wear-resistant layer (6) that is applied to the annular body (2) by thermal spraying; and
- a run-in layer (8) made of an AlCuFe alloy that is applied to the wear-resistant layer (6) by thermal spraying,
- wherein the run-in layer (8) comprises marks of shot peening shots,
- wherein the run-in layer (8) has a hardness HV of 150-250,
- wherein a coverage of 50-100 % is achieved during the shot peening, and wherein the run-in layer (8) has a roughness Rz of 60 - 95 µm.

2. The piston ring according to claim 1, wherein the run-in layer (8) is applied to the wear-resistant layer (6) by electric arc wire spraying.

3. The piston ring according to one of the preceding claims, further comprising an adhesive layer (4) that is applied to the running surface of the annular body (2) by thermal spraying, wherein the wear-resistant layer (6) is applied to the adhesive layer (4).

4. The piston ring according to one of the preceding claims, wherein the wear-resistant layer (6) and the run-in layer (8) are applied in oversprayed form, and / or wherein the flank of the annular body has a chamfer at its edges, wherein the chamfer preferably has an angle of 30 ° to 70 ° and / or a width of 0.5 to 2.0 mm, and / or wherein the annular body has gas discharge slots having a chamfer at their edges, wherein the chamfer preferably has an angle of 30 ° to 70 ° and / or a width of 0.5 to 2.0 mm.

5. The piston ring according to one of the preceding claims, wherein the piston ring is a large-bore piston ring.

6. A method for manufacturing a piston ring:
- providing an annular body (2);
- thermally spraying a wear-resistant layer (6) on the annular body (2); and
- thermally spraying a run-in layer (8) made of an AlCuFe alloy on the wear-resistant layer (6), and
- strain hardening the run-in layer by shot peening, wherein a coverage of 50-100 % is achieved during the shot peening,
- wherein the run-in layer (8) has a hardness HV of 150-250, and
- wherein the run-in layer (8) has a roughness Rz between 60 and 95 µm.

7. The method according to claim 6, wherein the run-in layer is applied to the wear-resistant layer (6) by electric arc wire spraying.

8. The method according to one of claims 6 or 7, wherein the thermal spraying of the wear-resistant layer includes:
- an electric arc wire coating process;
- a wire flame coating process;
- atmospheric plasma spraying, APS; and
- high velocity oxygen fuel spraying, HVOF.

9. The method according to one of claims 7 to 9, further comprising:
- providing the flank of the annular body with a chamfer at its edges, wherein the chamfer preferably has an angle of 30 ° to 70 ° and / or a width of 0.5 to 2.0 mm, and / or
- providing the gas discharge slots with a chamfer at their edges, wherein the chamfer preferably has an angle of 30 ° to 70 ° and / or a width of 0.5 to 2.0 mm.

## Revendications

1. Segment de piston, comprenant :
- un corps annulaire (2) ;
- une couche (6) de protection contre l'usure appliquée par projection thermique sur le corps annulaire (2) ; et
- une couche de rodage (8) en un alliage AlCuFe appliquée par projection thermique sur la couche (6) de protection contre l'usure,
- la couche de rodage (8) comprenant des empreintes de billes de grenaillage,
- la couche de rodage (8) ayant une dureté HV allant de 150 à 250,
- un recouvrement de 50 à 100 % étant obtenu lors du grenaillage, et la couche de rodage (8) ayant une rugosité Rz : de 50 à 95 µm.

2. Segment de piston selon la revendication 1, dans lequel la couche de rodage (8) est appliquée sur la couche (6) de protection contre l'usure par projection par fil à arc électrique.

3. Segment de piston selon l'une des revendications précédentes, comprenant en outre une couche (4) promotrice d'adhérence projetée thermiquement sur la surface de roulement du corps annulaire (2), la couche (6) de protection contre l'usure étant appliquée sur la couche (4) promotrice d'adhérence.

4. Segment de piston selon l'une des revendications précédentes, dans lequel la couche (6) de protection contre l'usure et la couche de rodage (8) sont appliquées sous forme pulvérisée, et/ou dans lequel le flanc du corps annulaire présente un chanfrein sur ses bords, le chanfrein ayant de préférence un angle de 30° à 70° et/ou une largeur de 0,5 à 2,0 mm, et/ou dans lequel le corps annulaire présente des fentes de décharge de gaz qui ont un chanfrein sur leurs bords, le chanfrein ayant de préférence un angle de 30° à 70° et/ou une largeur de 0,5 à 2,0 mm.

5. Segment de piston selon l'une des revendications précédentes, dans lequel le segment de piston est un grand segment de piston.

6. Procédé de fabrication d'un segment de piston, comprenant :
- le fait de prévoir un corps annulaire (2) ;
- le fait d'opérer une projection thermique d'une couche (6) de protection contre l'usure sur le corps annulaire (2) ; et
- le fait d'opérer une projection thermique d'une couche de rodage (8) en un alliage AlCuFe sur la couche (6) de protection contre l'usure, et
- le fait d'écrouir la couche de rodage par grenaillage, ce qui permet d'obtenir un recouvrement de 50 à 100 % lors du grenaillage,
- la couche de rodage (8) ayant une dureté HV allant de 150 à 250, et
- la couche de rodage (8) ayant une rugosité Rz comprise entre 60 et 95 µm.

7. Procédé selon la revendication 6, dans lequel la couche de rodage est appliquée sur la couche (6) de protection contre l'usure par projection par fil à arc électrique.

8. Procédé selon l'une des revendications 6 ou 7, dans lequel la projection thermique de la couche de protection contre l'usure comprend :
- un procédé de revêtement par fil à arc électrique ;
- un procédé de revêtement par flamme avec fil ;
- projection par plasma atmosphérique, en abrégé APS ; et
- projection par flamme à haute vitesse, en abrégé HOVF.

9. Procédé selon l'une des revendications 7 à 9, comprenant en outre :
- le fait de prévoir le flanc du corps annulaire avec un chanfrein sur ses bords, le chanfrein ayant de préférence un angle de 30° à 70° et/ou une largeur de 0,5 à 2,0 mm, et/ou
- le fait de prévoir des fentes d'évacuation des gaz avec un chanfrein sur leurs bords, le chanfrein ayant de préférence un angle de 30° à 70° et/ou une largeur de 0,5 à 2,0 mm.
